# EUROPEAN PATENT SPECIFICATION

(11) **EP 1 773 890 B1**
(45) Date of publication and mention of the grant of the patent: **05.11.2008**
(21) Application number: 05769509.0
(22) Date of filing: 27.07.2005
(51) Int. Cl.: C08B 37/10, A61K 31/727

(54) **PROCESS FOR THE PREPARATION OF LOW MOLECULAR WEIGHT HEPARIN**
VERFAHREN ZUR HERSTELLUNG VON NIEDERMOLEKULAREM HEPARIN
PROCEDE POUR LA PREPARATION D'HEPARINE DE FAIBLE POIDS MOLECULAIRE

(30) Priority: 29.07.2004 IT MO20040199
(43) Date of publication of application: 18.04.2007
(73) Proprietor: Biofer S.p.A., 41036 Medolla (IT)
(72) Inventor: SACCHI, Stefania, I-41012 Carpi (Modena) (IT); MONTORSI, Mauro, I-41100 Modena (IT); MARCHI, Egidio, I-40033 Casalecchio di Reno (Bologna) (IT)
(74) Representative: Bottero, Carlo
(86) International application number: PCT/IT2005/000448
(87) International publication number: WO 2006/011179

(56) References cited:
- US-A- 4 351 938
- US-A- 4 804 652
- US-A- 5 019 649
- US-A- 5 599 801

## Description

### Technical Field

Heparin and its derivatives are among the most used products in the prevention and treatment of thrombo-embolism events.

This active ingredient, heparin, has a very important effect on coagulation and is for this reason used to prevent thrombotic events following surgical operation and in the treatment of pulmonary embolisms or deep vein thrombosis. The anticoagulant effect of heparin is so relevant that treatment with this drug imposes constant monitoring of the hemocoagulant processes, leading to hospitalisation of the patient, or at least day hospital out-patient treatment.

### Background Art

Reduction of the molecular weight of heparin through fractioning (L.O. Andersson et al, Throm. Res. 9:575 (1976)) or by depolymerisation has resulted in active ingredients which are less anticoagulant, though still with good residual antithrombotic activity.

For example, European patents EP 0014184, EP 0040144, EP 0076279 and EP 0121067 describe various processes of heparin depolymerisation and obtain various types of low molecular weight heparin, which is typically indicated by the acronym LMWH. These types of LMWH exhibit different molecular weights, and chemical structures that are variously modified, especially in their terminal groups, and also different pharmacological activities.

In particular, the reduction of the molecular weight gives the depolymerised products an overall lower anticoagulant activity (APTT - Activated Partial Plastin Time) with respect to the initial heparin while Axa activity (anti Xa activity) is maintained at good levels, as is the antithrombotic activity of the product (F.A. Ofosu et al. "Mechanism of action of low molecular weight heparins and heparinoids" Ballicre's Clin. Haematol. 3:505-529 (1990)). US 4,804,652 and US 4,351,938 both describe methods of preparing said LMWH and its use as anticoagulant and antithrombotic. The pharmacodynamic is also positively affected by the reduction of molecular weight, as the active ingredient stays longer in the blood circuit, with higher hematic levels than those with unfractionated heparin (L.Bara et al., "Increased anti Xa bioavailability for a low molecular weight heparin compared with unfractionated heparin! Semin. Thromb. Hemost., 11:316-317 (1985)).

The above-described characteristics of LMWH have led experts in the field to search for processes for producing it which use extremely varied heparin depolymerisation processes. Processes have been used that exploit radical hydrolysis reactions (oxygenated water and copper catalyser, or peracids) oxidation hydrolysis reaction with periodate or enzymatic hydrolysis with heparinase, or β-elimination reactions by basic hydrolysis of the heparin ester, or treatments with sodium nitrite in an acidic ambient.

The last-mentioned process, described and claimed in European patents EP 0014184 and EP 0076279, provide an LMWH. which then requires further purification or fractionating. The use of sodium nitrite provides depolymerised heparin with a molecular weight that is more or less low according to the quantity of sodium nitrite used, but requires much care and attention because the final product must not contain more that a few parts per million (ppm) of nitrite ions and fewer than 0.25 ppm of N-nitrose (N-NO) groups.

If, on the one hand, the containing of the sodium nitrite in the final product (J.C. Lormeau et al., US Patent 5,019,649 (1991) and its determination do not represent a problem, on the other hand both the containing and the quantification of the N-NO groups are difficult to realise.

Since in theory there should be no presence of secondary amines in the heparin structure, the only functional groups able to render sufficiently-stable N-nitrose derivatives are the N-acetylglucosamine groups.

A valid hypothesis is that the N-nitrose groups that show up as a few ppm in the depolymerised product before purification derive from a nitrosation of the N-acetyglucosamine present in the heparin.

N-NO groups deriving from nitrosation of heparin are very stable, even if not at the level of N-alkylnitrosamines, and probably, during the depolymerisation reaction, a part of the acetyl-N-NO glucosamine formed may react, losing the acetyl group and converting into the diazonium salt of desacetyl glucosamine, giving depolymerised heparin in the normal reaction.

As these N-NO groups are very stable it is essential to apply a depolymerisation process that leads to an N-nitrose amine content which is below the prescribed limit or, alternatively to remove any N-NO groups that are present in order to satisfy the prescriptive limits set by Farmacopea Europea IV ed.

It is well known that N-NO groups are particularly sensitive to high-energy radiations, such as ultraviolet rays and γ rays, and that treatment of the product (heparin depolymerised by nitrosation) in solution or even in the solid state with these radiations can lead to the complete disappearance of the nitrites and N-NO residues contained in the product.

UV rays are widely used for maintaining sterility in sterile water or for the reduction of the nitrose derivatives in drinking water. In patent US 5,599,801 by J.F. Branellec et al, a process and an apparatus are described for eliminating nitrose groups from the low molecular weight heparins, obtained using the nitrosation process.

The limitation of this process is the low penetrative power of the UV rays, both in solutions and solids: this fact has an effect on times and apparatus used for the purification. The stability of the product that has been exposed to ray treatment is the greatest problem with y ray treatment.

For this reason there is a need to provide a process for reducing the quantities of nitrites and/or N-NO groups in the LMWH, which process is effective, more economical with respect to the prior art and very efficient.

On of the main aims of the present invention is to realise a depolymerisation process which enables an LMWH to be obtained having residual N-NO at levels below 0.25 ppm.

One of the aims of the present invention is to provide a process for depolymerisation that obtains an LMWH having nitrites below 5 ppm.

A further aim of the present invention is to provide a purification process for depolymerised heparin, obtained by use of sodium nitrite, able to purify the depolymerised heparin by reduction of the quantities of residual nitrites and N-NO nitrose groups.

These aims and more besides which will emerge from the detailed description that follows are all attained by the present invention, which has developed an LMWH preparation process and a purification process therefor.

The present invention also relates to a process for preparation of LMWH having a nitrite level and at the same time an N-NO nitrose group level within the limits set by the Farmacopea Europea IVth edition, having the characteristics set out in the appended claims 1-7.

A further aim of the present invention is to provide a purification process able to obtain a reduction of the nitrite and N-NO groups that may be present in the LMWH, to below the limits set by the Farmacopea Europea IVth edition, by a heat or microwave treatment.

The Farmacopea Europea IVth edition is incorporated in the present document by reference. In particular, page 1296, relating to heparins in general; pages 1297-1299 relating to LMWH; pages 1610-1612 relating to Nadroparin (depolymerised heparin obtained by nitrosation); pages 999-1000 relating to Dalteparin (depolymerised heparin obtained by nitrosation).

### Disclosure of Invention

The process of the present invention is realised by using a concentration of heparin of the standard type to be found on the market, comprised between 1% and 25% (grams per heparin with respect to the total weight of the solution); preferably from 5% to 20%; and more specifically, preferably between 10% and 16%. The heparin found on the market is usually freeze-dried as a sodium salt - heparinum natricum - Farmacopea Europea IVth edition, page 1296.

The applicant has found that heparin depolymerisation in the presence of sodium nitrite is done with a weight: weight ratio - heparin to sodium nitrite comprised between 60:1 and 45:1.

Advantageously the applicant has found that a weight: weight ratio of heparin to sodium nitrite comprised between 60:1 and 45:1 produces an LMWH having a nitrite content of less than 5ppm and at the same time an N-NO group content of less than 0.25 ppm.

In a preferred embodiment, the weight: weight ratio of heparin to sodium nitrite is comprised between 52:1 and 47:1.

In the weight ratios mentioned above, the sodium nitrite is considered as such independently of the titer of the salt used; for example the sodium nitrite is pure by analysis, having a sodium nitrite titer of about 97%.

In use, the sodium heparin in freeze-dried form is dissolved, for example at 25°C, in a container provided with means for heating and shaking.

Preferably the depolymerisation process is performed at a temperature comprised between 15°C and 30°C, for example between 23°C and 27°C, preferably at 25°C.

Sodium nitrite is added to the solution, for example 97% sodium nitrite, and an acidifying substance, for example hydrochloric acid, to bring the pH of the solution to a pH comprised between 2.0 and 4.0. The disappearance of the nitrite is monitored using starch-iodine paper. Subsequently the pH of the solution is brought to a value comprised between 10 and 13 by addition of an alkaline substance. Finally NaBH₄ is added in a weight quantity comprised between 0.5% and 2.5%, with respect to the start weight of the heparin. At this point the solution is left at a temperature of between 20-30°C, for example 25°C, for a time comprised between 10 and 30 hours, for example 20 hours. The excess of NaBH₄ is removed by adding an acid substance up to pH comprised between 2 and 4, for example pH 3.

Following the above process, a depolymerised product is obtained which respects the chemical-physical and biological specifications of the Farmacopea Europea IVth edition for depolymerised heparin with nitrous acid, having an N-nitrosamine content of less than 0.25 ppm and a final amount of not less than 70% (grams of depolymerised heparin with respect to the starting weight of the heparin), for example an amount of between 75% and 85%.

With a heparin-sodium nitrite weight ratio of less than 45:1, a product is obtained having an N-nitrosamine content above the set limits and with a lower amount produced than desired. This product has to be further purified.

With a heparin-sodium nitrite weight ratio of more than 60:1 an acceptable level of depolymerisation is not obtained.

The purification process, object of the present invention, of a depolymerised heparin, obtained by nitrosation, can be performed by heating or by microwave treatment.

It has been found that both heat and microwaves of between 900 and 2450 MegaHertz (MHz) are able drastically to reduce the presence of both the nitrites and the N-nitrous groups at a pH comprised between 3.0 and 13.0, preferably at a pH comprised between 4.0 and 12.0, for example at pH 10-12.

Heat and microwaves can be used separately even though microwave treatment of the water solutions containing LMWH leads to a heating-up of the water solution and therefore to a synergic heating and microwave action in eliminating the nitrous groups present in the LMWH deriving from depolymerisation by nitrosation.

In a preferred embodiment, the purification process is done by heating.

A water solution containing from 1% to 20% (weight: weight) of LMWH (obtained by nitrosation) to be purified is heated and shaken until it reaches a temperature comprised between 40°C and 90°C, preferably between 60°C and 80°C, at a pH comprised between 3.0 and 13.0, preferably between 4.0 and 12.0, for a time period comprised between 0.5 and 3 hours.

Thereafter, the solution is brought to a pH value comprised between 11 and 13, preferably pH 12, at a temperature comprised between 70°C and 90°C, with shaking. The solution is purified by membrane ultrafiltration in known ways.

In one embodiment, the purification process is realised by use of microwaves. The purification of LMWH containing nitrites and N-nitrose groups can be performed by subjecting the water solution containing from 1% to 20% of the LMWH at a pH comprised between 7.0 and 13.0, preferably between 10.0 and 20.0 to microwave radiation for a time period comprised between 60 and 300 seconds using microwaves having a frequency comprised between 900 and 2450 MHz, at a power comprised between 600 and 1000 Watts, in the presence of inert silicates, preferably belonging to the montmorillonite class, in powder form and in quantities from 5% to 15% with respect to the weight of the LMWH. The presence of the inert silicate acts as an amplifier of the effect of the microwaves.

The suspension containing LMWH in solution and the inert silicate is cooled to room temperature, filtered to eliminate the inert material, the pH is brought to a value of between 6.5 and 7.0, the solution is ultrafiltrated to eliminate the salts present in the solution and the active ingredient is freeze-dried.

An extremely pure LMWH is obtained, as shown in table 1, with amounts of between 96% and 98%, and with practically unaltered pharmacological activity.

**Table 1: ANALYSIS OF SAMPLES BEFORE AND AFTER PURIFICATION STEP**

| | Activity | AIIa | Activity | Axa | -NO₂ | -NO₂ | N-NO | N-NO |
|---|---|---|---|---|---|---|---|---|
| | | (IU) | | (IU) | (ppm) | (ppm) | (ppm) | (ppm) |
| | Before | After | Before | After | Before | After | Before | After |
| Sample 1 (example 2) | 36.93 | 31.18 | 124.46 | 128.14 | 2.57 | 0.12 | 0.13 | 0.05 |
| Sample 2 (example 3) | 36.93 | 38.57 | 124.46 | 118.35 | 2.57 | n.v* | 0.13 | 0.07 |
| Sample 3 (example 4) | 38.93 | 32.61 | 144.46 | 152.74 | 0.79 | n.v.* | 0.18 | 0.03 |
| Sample 4 (example 5) | 39.23. | 33.18 | 107.33 | 100.11 | 0.38 | n.v.* | 0.21 | 0.08 |
| Sample 5 (example 6) | 39.23 | 36.64 | 107.33 | 11.64 | 0.38 | n.v.* | 0.16 | n.v* |

| | | | | | | | | |
|---|---|---|---|---|---|---|---|---|
| * n.v : not valuable | | | | | | | | |

The analyses of the biological parameters, i.e. the anti IIa activity (AIIa) and the anti Xa activity (Axa), the chemical parameters, i.e. the content of the nitrites and N-nitroso groups, were performed according to methods described in Farmacopea Europea IVth edition for LWMH, pages 999, 1297 and 1610.

As can be seen in Table 1, the depolymerisation process of the present invention enables obtaining LMWH having a quantity of nitrites which is lower than or equal to 5 ppm (determined by liquid chromatography, Farmacopea Europea IVth edition page 999) and a quantity of nitroso groups which is lower than or equal to 0.25 ppm (determined by breaking the N-NO bond using hydrobromic acid in ethyl acetate in a reflux condenser by measuring the release of NO by chemilluminescence, Farmacopea Europea IVth edition page 1611 - known as EPS solution).

In a preferred embodiment, the EPS solution can be subjected to the purification process of the present invention with the aim of obtaining purified Dalteparin or Nadroparin.

Alternatively, in a further embodiment, the EPS solution can be subjected to separation in Dalteparin or Nadroparin. Subsequently, the fractions of Dalteparin and Nadroparin obtained from the separation are purified with the aim of obtaining purified Dalteparin or Nadroparin.

The examples included herein below are to be considered a further illustration of the invention, and are therefore intended as non-limiting.

### EXAMPLE 1: Preparation of Low Molecular Weight Heparin by depolymerisation using sodium nitrite.

100g of sodium heparin with anticoagulant activity < 160 IU./mg are dissolved in 900 ml of distilled water at 25°C. 2.07 g of NaNO₂ (97%) are added to the solution, and then HCl 5N is added up to pH 2.5. The reaction is controlled to detect disappearance of nitrite using starch-iodine paper. The solution pH is brought to 10.5 with a concentrated solution of NaOH and NaBH₄ is added at 1.5% quantity of the starting weight of the heparin.

The solution is left at room temperature for 20 hours and is then acidified with HCl 5N, bringing the pH to 3.2 in order to destroy the excess of NaBH₄. The solution is then neutralised with NaOH 5N, bringing the pH to 6.8. The solution obtained is purified by ultrafiltration in order to eliminate the salts and substances having very low molecular weight, in line with the specifications set down by Farmacopea Europea IVth edition, pages 999 and 1610.

The solution is then freeze-dried, obtaining a Low Molecular Weight Heparin at an amount of not less than 70% of the starting heparin weight.

The product obtained, without being subjected to further purification, has an N-nitrosamine content which is lower than the limits of Farmacopea Europea IVth edition (0.25 ppm) as mentioned in the description of the invention and in TABLE 1.

Although the product obtained according to the depolymerisation process of the present invention falls within the specifications of Farmacopea Europea IVth edition for nitrite and

N-nitrosamine content, it is all the same subjected to a purification process in order to verify the efficiency of this process, as shown in the following examples.

The purification process is a general method which can be applied for purification of an LMWH obtained by depolymerisation by nitrosation.

### EXAMPLE 2: Purification by heating

50 grams of LMWH obtained as described in example 1 are dissolved in 1000 ml of distilled water without nitrites, and pH is corrected to 4.5 with HCl 1N, the solution then being heated to 50°C for 30 minutes, shaking. The solution is cooled and the pH is brought to 12.0 with NaOH 5N, heating to 80°C, shaking, for 30 minutes. The pH is corrected with HCl 2N up to pH 6.7. Then the sodium chloride is eliminated from the solution by ultrafiltration, using a membrane with a 600 Dalton cut-off and bi-distilled water free of nitrites and nitrates. The purified heparin is freeze-dried, obtaining 48.35g of Low Molecular Weight Heparin with a final amount of 96.7%.

### EXAMPLE 3: Purification by microwave radiation.

70 grams of LMWH, obtained according to example 1, are dissolved in 1400 ml of bi-distilled water free of nitrites and nitrates, bringing the pH to 12 with NaOH 1N. 5 g of montmorillonite powder are added to the solution which is then subjected to microwave radiation at 2450 MHz for 100 seconds at 600 Watts, and left to cool to 25°C, the pH is corrected with HCl 5N to 6.5. The inert material is filtered, the solution purified and freeze-dried; 68.7% of product is obtained, giving a total amount of 98.14%.

### EXAMPLE 4: Purification by microwave radiation.

65 grams of LMWH, obtained according to example 1, are dissolved in 800 ml of bi-distilled water free of nitrites and nitrates. 4g of montmorillonite powder are added to the solution, which is brought to pH 11.0 with NaOH 2N and subjected to microwave radiation at 2450MHz at 600 Watts for 100 seconds. The solution is then cooled and the pH brought to 6.5-7.0 with HCl 1N, the inert material is filtered and the resulting solution subjected to ultrafiltration using a 600 Dalton cut-off membrane. The ultrafiltered solution is freeze-dried, obtaining 63.3 grams of product, i.e. 97.38%.

### EXAMPLE 5: Purification by microwave radiation.

The process of example 4 is repeated using 60 grams of LMWH, obtained according to example 1, dissolved in 1000 ml of water. 9 grams of montmorillonite powder are added to the solution, which is brought to pH 12 with NaOH 2N and radiated for 60 seconds with microwaves at 2450 MHz at 600 Watts. The pH is corrected with HCl 2N, bringing it to 7.1. The inert material is filtered and the resulting solution, after ultrafiltration, is freeze-dried, obtaining 59.1 grams of product, i.e. 98.5%.

### EXAMPLE 6: Purification by microwave radiation.

The process of claim 4 is repeated using 65 grams of LMWH, obtained according to example 1, dissolved in 1000 ml of water. 8 g of montmorillonite powder are added to the solution, which is brought to pH 10.5 with NaOH 2N and radiated for 120 seconds with microwaves at 2450 MHz at 600 Watts. The solution is cooled to 24°C and the pH is corrected with HCl 2N, bringing it to 6.9. The inert material is filtered and the resulting solution subjected to ultrafiltration using a 600 Dalton cut-off membrane and desalted before being freeze-dried. 64.1 grams of purified product are obtained, i.e. 98.6%.

### EXAMPLE 7: Preparation of Low Molecular Weight Heparin by depolymerisation with sodium nitrite.

20 grams of sodium heparin having anticoagulant activity of < 160 IU/mg are dissolved in 133 ml of distilled water at 25°C. 0.427 g of NaNO₂ at 97% are added, as is hydrochloric acid at 5N concentration to reach pH 2.5. During the ensuing reaction starch-iodine paper is used to control the disappearance of the nitrite. The solution pH is then brought to 10.5 with a concentrated solution of sodium hydroxide and 0.3g of NaBH₄ is added, at 1.5%.

The solution is left at room temperature for 20 hours, and is then acidified to bring the pH to 2.8 so as to destroy the excess of NaBH₄. The solution obtained is purified by ultrafiltration.

### EXAMPLE 8: Preparation of Low Molecular Weight Heparin by depolymerisation with sodium nitrite.

20 grams of sodium heparin having anticoagulant activity of < 160 IU/mg are dissolved in 133 ml of distilled water at 15°C. 0.412 g of NaNO₂ at 97% are added, as is hydrochloric acid at 5N concentration to reach pH 2.5. During the ensuing reaction starch-iodine paper is used to control the disappearance of the nitrite. The solution pH is then brought to 10.5 with a concentrated solution of sodium hydroxide and 0.3g of NaBH₄ is added, at 1.5%.

The solution is left at room temperature for 20 hours, and is then acidified to bring the pH to 3.0 so as to destroy the excess of NaBH₄. The solution obtained is purified by ultrafiltration.

## Claims

1. A process for preparation of a solution depolymerised purified heparin comprising following stages:
i) preparation of a low molecular weight heparin, by depolymerisation of a heparin with sodium nitrite in a water solution, and
ii)treatment of the depolymerised heparin in the water solution at a temperature comprised between 40°C and 90°C for a time comprised between 0,5 and 3 hours at a pH between 3.0 and 13.0, and then
iii)bringing the solution up to a pH of 11 to 13 and to a temperature comprised between 70°C and 90°C

2. The process according to claim 1, wherein the solution in stage ii) is brought up to a pH of 12.

3. The process according to claims 1 or 2, wherein membrane ultrafiltration is used to purify the LMWH from the resulting solution of stage iii).

4. A process for the preparation of a depolymerised purified heparin comprising following stages:
preparation of a low molecular weight heparin, by depolymerisation of a heparin with sodium nitrite in a water solution, and
treatment of the depolymerised heparin in the water solution with microwaves at between 900 and 2450 MHz and at a power comprised between 600 and 1000 Watts for a time comprised between 60 and 300 seconds.

5. The process according to claim 4, wherein an inert silicate is added to the depolymerised heparin, preferably a silicate from the montmorillonite class of silicates.

6. The process according to claim 5, wherein the inert silicate is added in a quantity comprised between 5 and 20% in weight, with respect to a weight of the heparin.

7. The process according to claims 4 to 6, wherein the depolymerised heparin is in a water solution at a concentration comprised between 1 and 25% and a pH comprised between 6 and 13.

## Patentansprüche

1. Verfahren zur Herstellung einer Lösung von depolymerisiertem gereinigtem Heparin umfassend die folgenden Schritte:
i) Herstellung eines niedermolekularen Heparins durch Depolymerisation eines Heparins mit Natriumnitrit in einer wässrigen Lösung, und
ii) Behandlung des depolymerisierten Heparins in der wässrigen Lösung bei einer Temperatur von 40°C bis 90°C für eine Zeit von 0,5 bis 3 Stunden und bei einem pH-Wert von 3,0 bis 13,0, und dann
iii) Einstellung der Lösung auf einen pH-Wert von 11 bis 13 und auf eine Temperatur von 70°C bis 90°C.

2. Verfahren nach Anspruch 1, worin die Lösung des Schrittes ii) auf einen pH-Wert von 12 eingestellt wird.

3. Verfahren nach den Ansprüchen 1 oder 2, worin Membranultrafiltration zur Reinigung des niedermolekularen Heparins aus der erhaltenen Lösung des Schrittes iii) verwendet wird.

4. Verfahren zur Herstellung eines depolymerisierten gereinigten Heparins umfassend die folgenden Schritte: Herstellung eines niedermolekularen Heparins durch Depolymerisation eines Heparins mit Natriumnitrit in einer wässrigen Lösung, und Behandlung des depolymerisierten Heparins in der wässrigen Lösung durch Mikrowellen bei 900 bis 2.450 MHz und mit einer Leistung von 600 bis 1.000 Watt für eine Zeit von 60 bis 300 Sekunden.

5. Verfahren nach Anspruch 4, worin ein inertes Silikat zum depolymerisierten Heparin zugesetzt wird, vorzugsweise ein Silikat aus der Montmorillonit-Klasse von Silikaten.

6. Verfahren nach Anspruch 5, worin das inerte Silikat in einer Menge von 5 bis 20 Gew.-%, bezogen auf ein Gewicht des Heparins, zugesetzt wird.

7. Verfahren nach den Ansprüchen 4 bis 6, worin das depolymerisierte Heparin in einer wässrigen Lösung bei einer Konzentration von 1 bis 25% und einem pH-Wert von 6 bis 13 liegt.

## Revendications

1. Procédé pour la préparation d'une solution d'héparine dépolymérisée purifiée comprenant les étapes suivantes:
i) préparation d'une héparine à bas poids moléculaire par dépolymérisation d'une héparine avec nitrite de sodium dans une solution aqueuse, et
ii) traitement de l'héparine dépolymérisée dans la solution aqueuse à une température de 40°C à 90°C pour un temps de 0,5 à 3 heures avec un pH de 3,0 à 13,0, et ensuite
iii) réglage de la solution à un pH de 11 à 13 et à une température de 70°C à 90°C.

2. Procédé selon la revendication 1, où la solution de l'étape ii) est réglée à un pH de 12.

3. Procédé selon les revendications 1 ou 2, où pour purifier l'héparine à bas poids moléculaire de la solution résultante de l'étape iii) on utilise l'ultrafiltration par membrane.

4. Procédé pour la préparation d'une héparine dépolymérisée purifiée comprenant les étapes suivantes:
préparation d'une héparine à bas poids moléculaire par dépolymérisation d'une héparine avec nitrite de sodium dans une solution aqueuse, et
traitement de l'héparine dépolymérisée dans la solution aqueuse par micro-ondes à 900 à 2.450 MHz et avec une puissance de 600 à 1.000 Watt pour un temps de 60 à 300 secondes.

5. Procédé selon la revendication 4, où un silicate inerte est ajouté à l'héparine dépolymérisée, préférablement un silicate de la classe des silicates de montmorillonite.

6. Procédé selon la revendication 5, où le silicate inerte est ajouté dans une quantité de 5 à 20% en poids par rapport à un poids de l'héparine.

7. Procédé selon les revendications 4 à 6, où l'héparine dépolymérisée est dans une solution aqueuse à une concentration de 1 à 25% et avec un pH de 6 à 13.
